# EUROPEAN PATENT APPLICATION

(11) **EP 4 640 467 A1**
(43) Date of publication of application: **29.10.2025**
(21) Application number: 25154159.5
(22) Date of filing: 27.01.2025
(51) Int. Cl.: B60K 17/28, B60K 25/02, F02B 67/06

(54) **VEHICLE POWER TAKE OFF**

(30) Priority: 28.04.2024 US 202463639641 P
(71) Applicant: MARTIN Special Technics GmbH, 86720 Nördlingen (DE)
(72) Inventor: Fritz, Oliver, 29681 Simpsonville (US); Martin, Joerg, 86720 Nördlingen (DE)
(74) Representative: Schorr, Peter Karl

(57) **Abstract**

The invention relates to a power take off system for a vehicle comprising:
a chassis;
an engine carried by the chassis for providing rotational energy to a power take off drive shaft wherein the power take off drive shaft is interwoven through the chassis; a power source attached to the power take off drive shaft adapter to operate with the rotational energy provided by the power take off drive shaft.

## Description

### BACKGROUND OF THE INVENTION

### 1) Field of the Invention

This invention is directed to a power take off assembly that is designed to be placed on commercial vehicles such as Mercedes Sprinter Van, Ford Transit Cargo Van, Nissan NV1500 S Cargo Van, Ram ProMaster 1500 Cargo Van and other similar commercial vehicles that have covered chassis.

### 2) Description of the Related Art

Power take-off (PTO) is a device that transfers an engine's mechanical power to another piece of equipment. A PTO allows the hosting energy source to transmit power to additional equipment that does not have its own engine or motor. For example, a PTO can be used to run machinery (e.g., jackhammer, hydraulic pump) using a tractor's engine. These can be found on dump trucks, tankers, and farm tractors. However, none exist for utility vehicles that are used in more urban areas.

For example, the ability to provide power to certain tools has been made using combustion as shown in United States Patent 6,783,045. This patent requires that there be a fuel/air mixture in a combustion chamber ignited when the head switch of a nail gun and the trigger switch are turned on. This requires a separate power source to drive the nail gun. The separate power source and the nail gun are transported on a vehicle such as offered by the Mercedes Sprinter Van, Ford Transit Cargo Van, Nissan NV1500 S Cargo Van, Ram ProMaster 1500 Cargo Van, and other similar commercial vehicles. Typically, these vehicles are built on a truck chassis and used to transport tools and equipment such as a combustion driver nail gun, jack hammer, paint sprayer, a multitude of other power tools. These tools are typically powered by a separate power system (e.g., combustion power source, compressors, and batteries) with the vehicle being used only for storage and transport of the tools and equipment.

It would be advantageous for the power tool to be able to be powered by the engine of the vehicle without the need for these separate power sources.

### BRIEF SUMMARY OF THE INVENTION

The above objectives are accomplished by providing a power take off system for a vehicle with the features of claim 1, a power take off system with the features of claim 11 and a power take off system with the features of claim 14. Further embodiments of the invention provide the features of the dependent claims. The above objectives are accomplished by providing a power take off system for a vehicle that can be added to an existing vehicle. The system can include a chassis; an engine carried by the chassis for providing rotational energy to a power take off drive shaft wherein the power take off drive shaft is interwoven through the chassis; a power source attached to the power take off drive shaft adapter to operate with the rotational energy provided by the power take off drive shaft. Universal joints can be used to allow the drive shafts to be disposed in and through the chassis.

The power take off system can include a pulley attached to the power take off drive shaft wherein the pulley is included in a serpentine pulley assembly of an existing engine. The pulley can be added to the engine allowing a power take off belt to be added. A clutch that can be engaged with the engine can be adapted to engage with the power take off drive shaft to transfer energy from the engine to the power take off drive shaft. The engine can have two modes operational where the power is delivered to the power take off drive shaft and when the power is delivered to the power train. The engine can idle or otherwise run and provide power to the power take off drive shaft.

The power take off drive shaft can be attached to the power source by a gear box. The chassis where this system is installed could for a Mercedes Sprinter Van, Ford Transit Cargo Van, Nissan NV1500 S Cargo Van, or Ram ProMaster 1500 Cargo Van. The power source could be adapted to power a combustion driver nail gun, jack hammer, paint sprayer, and a multitude of other power tools. The power take off drive shaft could include a first drive shaft and a second drive shaft connected by a universal joint. The power source could be disposed below a vehicle body supported by the chassis.

The power take off system could include a rearward drive shaft extended past the rear of the vehicle and connected to the engine. An external tool and/or equipment can be adapted to receive rotational energy from the rearward drive shaft. The external tool and/or equipment could be removable attached to the vehicle and/or supported by a trailer.

The power take off system can include a first gear box operatively associated with the power source and a second gear box operatively associated with the external tool and/or equipment.

The power take off system can include a pulley attached to an engine; a belt driven by the pulley and adapted for providing rotational energy to a power take off drive shaft; and, a power source connected to the power take off drive shaft having a operating position and an idle position, wherein in the operating position, a rotational energy from the engine is directed to the power take off drive shaft and away from a locomotion drive shaft. An engine controller can be adapted to increase an idle speed when the operating position. The power take off drive shaft can be a first power take off drive shaft and a second power take off drive shaft can be driven by the engine and extends to a rear of a vehicle. A first gear box can be operatively associated with the first power take off drive shaft and a second gear box operatively associated with the second power take off drive shaft.

The power take off system can include a power take off drive shaft connected to an engine; and a power source connected to the power take off drive shaft having an operating position and an idle position, wherein in the operating position, rotational energy from the engine is directed to the power take off drive shaft and away from a locomotion drive shaft. A tool and/or equipment can be powered by the power take off drive shaft in the operational position.

### BRIEF DESCRIPTION OF THE SEVERAL VIEWS OF THE DRAWINGS

The construction designed to carry out the invention will hereinafter be described, together with other features thereof. The invention will be more readily understood from a reading of the following specification and by reference to the accompanying drawings forming a part thereof, wherein an example of the invention is shown and wherein:
Figure 1 is a side view of aspects of the invention.
Figure 2 is a side view of aspects of the invention.
Figure 3 is a side view of aspects of the invention.
Figure 4 is a top view of aspects of the invention.
Figure 5 is a perspective view of aspects of the invention.
Figure 6 is a side view of aspects of the invention.

### DETAILED DESCRIPTION OF THE INVENTION

With reference to the drawings, the invention will now be described in more detail.

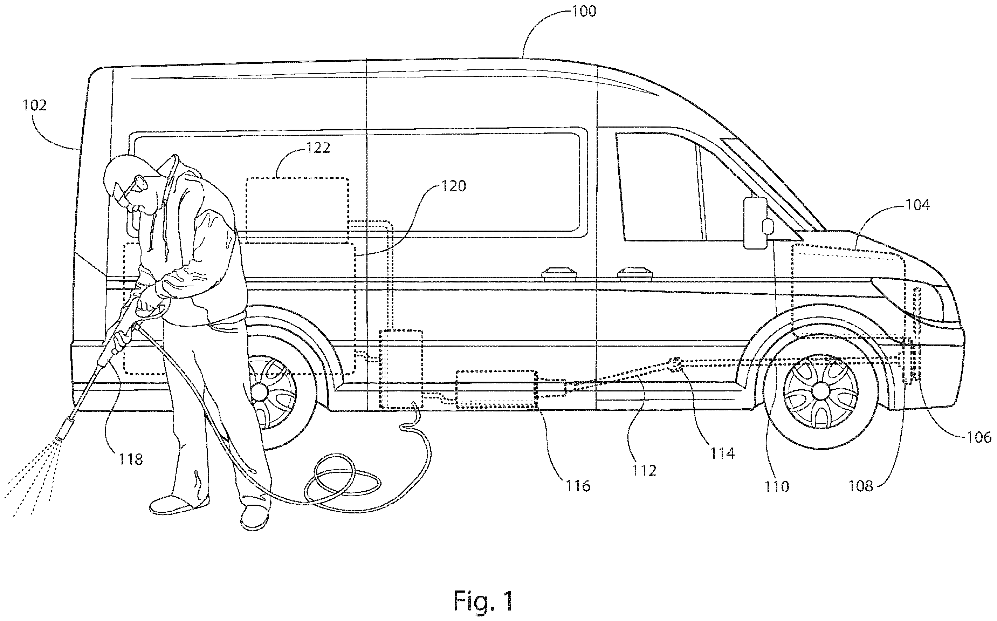

Referring to Figure 1, a vehicle 100 having a body 102 is disposed on a chassis that also carries an engine 104. In operation, there are tools and equipment that require powering such as combustion power source, compressors, and batteries that are attached directly to the tool or equipment. Such tools and equipment can include combustion driver nail gun, jack hammer, paint sprayer, and a multitude of other power tools. This system include a power transfer assembly such as a belt system 106 that can transfer rotations energy from the engine to a clutch 108. Therefore, when the vehicle is using the engine for locomotion, the clutch 108 can be disengaged so that power is not provided to drive shaft 110. Therefore, the engine is freed to use all is energy for locomotion.

In one example, the vehicle can be stopped with the engine running and the clutch engaged. In this configuration, the engine belt assembly transfers the power from the engine to the clutch that can deliver rotational energy to the drive shafts 110 and 112. In one embodiment, the drive shaft 110 can be connected to drive shaft 112 through a universal joint 114. Drive shaft 112 can deliver rotational energy to a power source 116 that can power a tool or equipment. For example, power source 116 can be a compressor for providing power washing with power washer wand 118. The vehicle can hold a water support 120 and detergent 122 that can be used for power washing providing for a mobile power washing station.

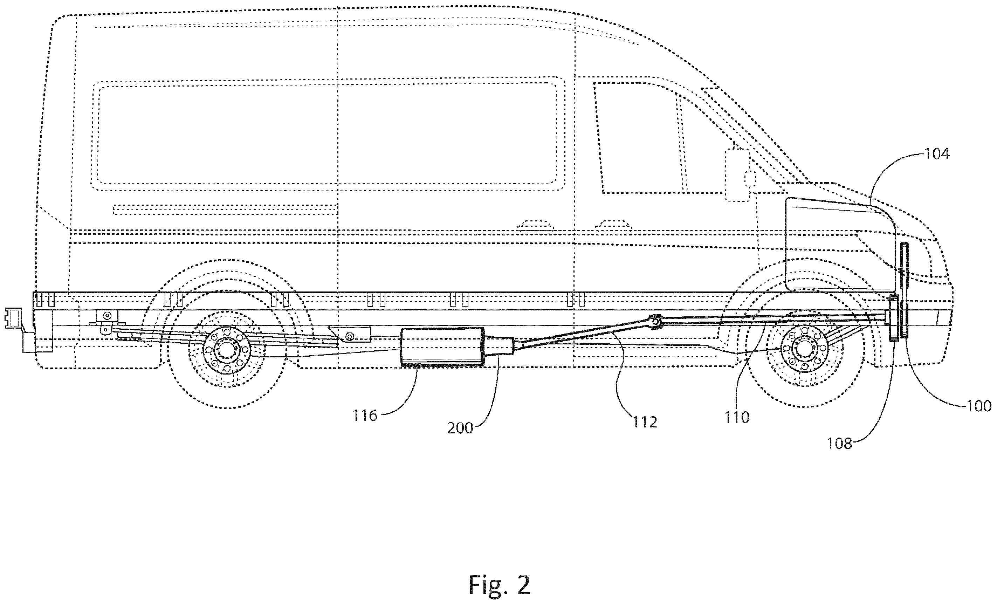

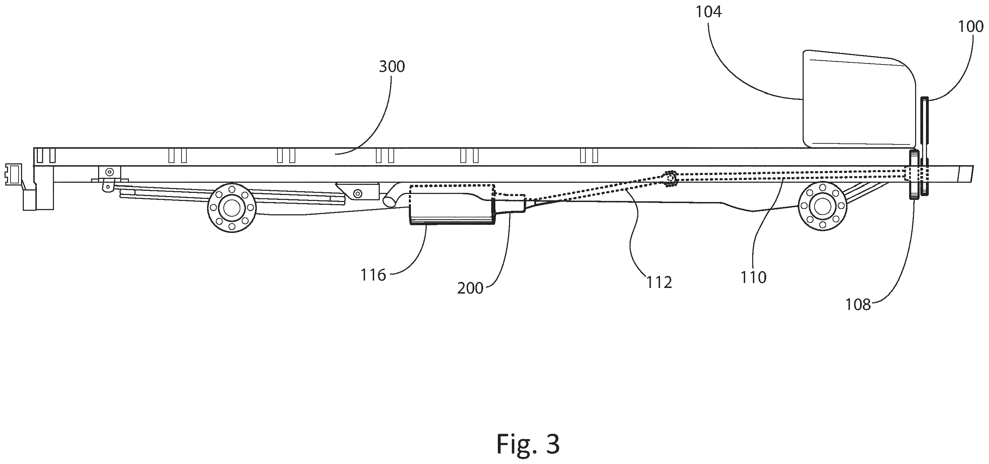

Referring to Figures 2 through 5, the power source 116 can include a gear box 200 that allows the rotational energy from drive shaft 112 to be stepped up or down according to the needs of the power tool or equipment. The system allows for the installation of the components to be placed throughout the chassis 300 (Figure 3) so that modification of the chassis is no necessary. The components can be attached to an existing chassis.

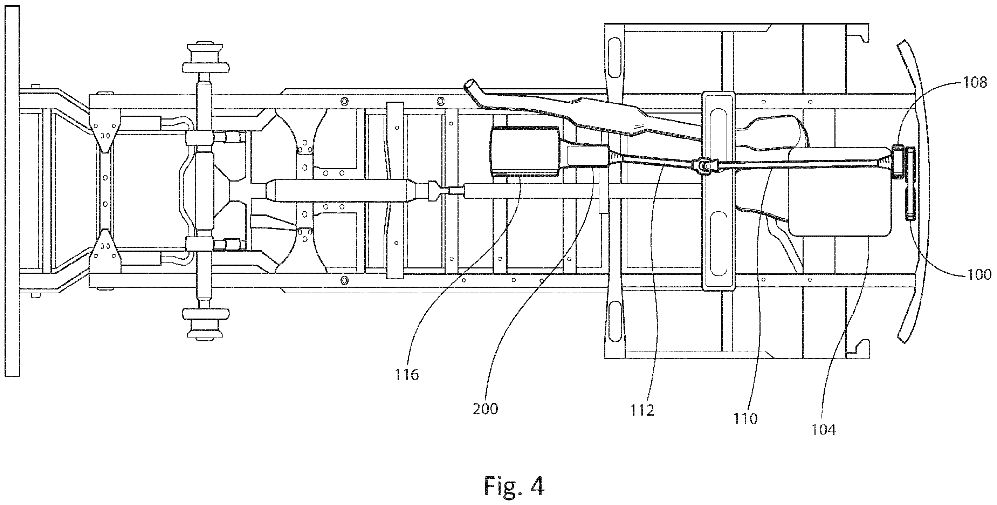

Referring to Figure 4, the engine can be seen attached to the drive train. The drive train can include a drive train drive shaft. When in an operational position, the engine can be disconnected (e.g., clutch / transmission) from the drive train drive shaft so that there is no rotational energy delivered to the transfer box or wheels. Therefore, the vehicle can be stationary with the engine running. The rotational energy can be delivered to the power take off draft shaft 110 allowing power to the power source without the vehicle moving.

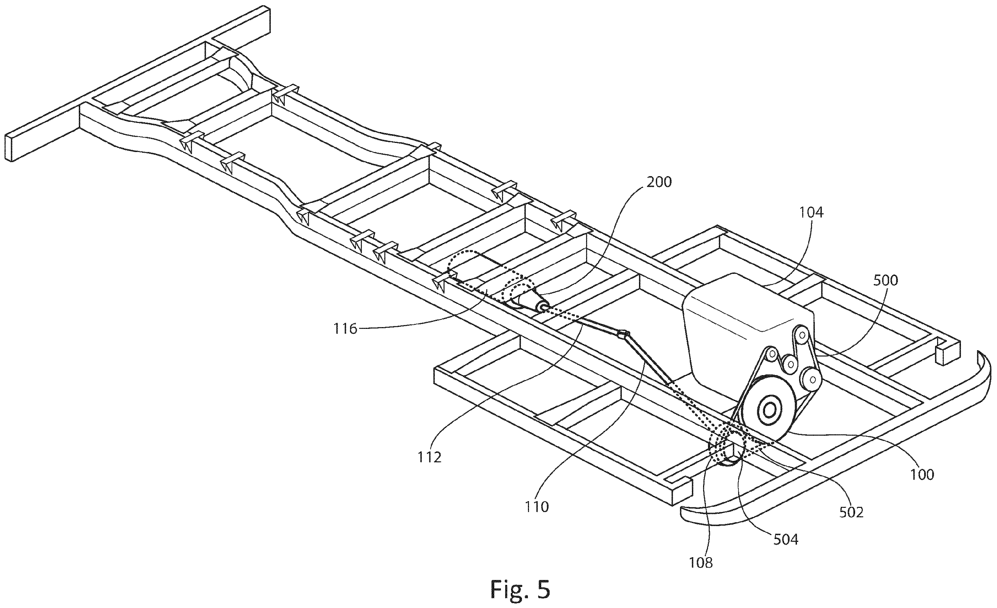

Referring to Figure 5, engine 104 can have a multi belt pulley system. The multi-belt pulley system can include multiple groves for receiving belts. The pulley can receive a serpentine belt that can drive components of vehicle such as AC, power steering, alternator and the like. A power take-off belt 502 can also be connected to the engine with the same pulley. The puller can be replaced to add a groove to the pulley is needed. The power take off pulley can be connected to a power take off drive pulley 504 that can engage a clutch. When the clutch is engaged, the power take off pulley provides rotational energy to drive shaft 110.

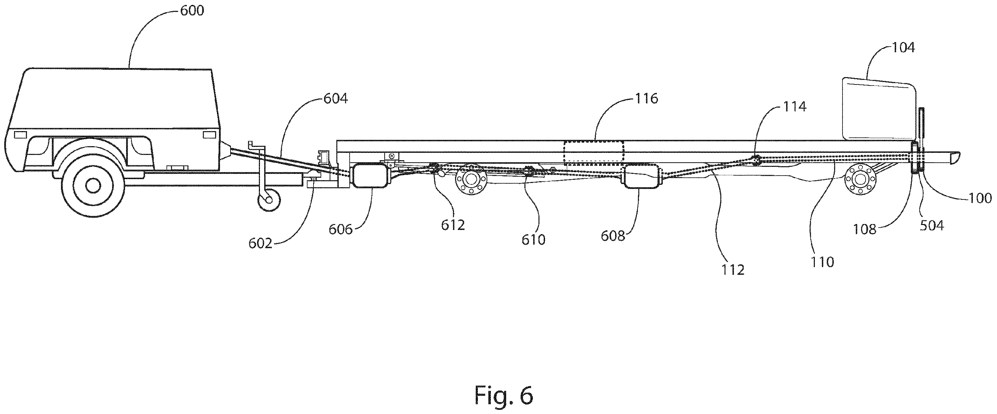

Referring to Figure 6, the power take off assembly can power an external tool or equipment 600 (e.g., external tool). The external tool can be removable attached to the vehicle such as with trailer hitch 602. The external tool can be attached to a rear drive shaft 604. The rear draft shaft can be connected to the power take off pulley 504. The rear drive shaft can be connected to a second gear box 606 as well as a first gear box 608. Therefore, power source 116 can have a different rotational energy applied that that of the external tool 600. The various drive shafts can be disposed in and around the chassis but the user of universal joints 114, 610 and 612.

It is understood that the above descriptions and illustrations are intended to be illustrative and not restrictive. It is to be understood that changes and variations may be made without departing from the spirit or scope of the following claims. Other embodiments as well as many applications besides the examples provided will be apparent to those of skill in the art upon reading the above description. The scope of the invention should, therefore, be determined not with reference to the above description, but should instead be determined with reference to the appended claims, along with the full scope of equivalents to which such claims are entitled. The disclosures of all articles and references, including patent applications and publications, are incorporated by reference for all purposes. The omission in the following claims of any aspect of subject matter that is disclosed herein is not a disclaimer of such subject matter, nor should it be regarded that the inventor did not consider such subject matter to be part of the disclosed inventive subject matter.

## Claims

1. A power take off system for a vehicle comprising:
a chassis;
an engine carried by the chassis for providing rotational energy to a power take off drive shaft wherein the power take off drive shaft is interwoven through the chassis;
a power source attached to the power take off drive shaft adapter to operate with the rotational energy provided by the power take off drive shaft.

2. The power take off system of claim 1 including a pulley attached to the power take off drive shaft wherein the pulley included in a serpentine pulley assembly and/or including a clutch driven by the engine and adapted to engage with the power take off drive shaft to transfer energy from the engine to the power take off drive shaft.

3. The power take off system of claim 2 wherein the clutch is driven by a pulley adapted to transfer rotational energy from the engine to the clutch.

4. The power take off system of claim 1 wherein the power take off drive shaft is attached to the power source by a gear box and/or wherein the chassis is for a Mercedes Sprinter Van, Ford Transit Cargo Van, Nissan NV1500 S Cargo Van, or Ram ProMaster 1500 Cargo Van.

5. The power take off system of claim 1 wherein the power source is adapted to power a combustion driver nail gun, jack hammer, paint sprayer, and a multitude of other power tools.

6. The power take off system of claim 1 wherein the power take off drive shaft include a first drive shaft and a second drive shaft connected by a universal joint.

7. The power take off system of claim 1 wherein the power source is disposed below a vehicle body supported by the chassis.

8. The power take off system of claim 1 including a rearward drive shaft extended past a rear of the vehicle and connected to the engine, and in particular including an external tool and/or equipment adapted to receive a rotational energy from the rearward drive shaft.

9. The power take off system of claim 8 wherein the external tool and/or equipment is removable attached to the vehicle and in particular wherein the external tool and/or equipment is supported by a trailer.

10. The power take off system of claim 9 including a first gear box operatively associated with the power source and a second gear box operatively associated with the external tool and/or equipment.

11. The power take off system comprising:
a pulley attached to an engine;
a belt driven by the pulley and adapted for providing rotational energy to a power take off drive shaft; and,
a power source connected to the power take off drive shaft having a operating position and an idle position, wherein in the operating position, a rotational energy from the engine is directed to the power take off drive shaft and away from a locomotion drive shaft.

12. The power take off system of claim 11 including an engine controller adapted to increase an idle speed when the operating position.

13. The power take off system of claim 11 wherein the power take off drive shaft is a first power take off drive shaft and a second power take off drive shaft is driven by the engine and extends to a rear of a vehicle and in particular including a first gear box operatively associated with the first power take off drive shaft and a second gear box operatively associated with the second power take off drive shaft.

14. A power take off system comprising:
power take off drive shaft connected to an engine; and,
a power source connected to the power take off drive shaft having an operating position and an idle position, wherein in the operating position, rotational energy from the engine is directed to the power take off drive shaft and away from a locomotion drive shaft.

15. The power take off system of claim 14 including a tool and/or equipment powered by the power take off drive shaft in the operational position.
